# DEMANDE DE BREVET EUROPEEN

(11) **EP 0 690 365 A1**
(43) Date de publication de la demande: **03.01.1996**
(21) Numéro de dépôt: 95401558.2
(22) Date de dépôt: 28.06.1995
(51) Int. Cl.: G06F 1/00

(54) **Dispositif pour connecter un terminal d'interrogation avec un serveur de données confidentielles**

(30) Priorité: 30.06.1994 FR 9408084
(71) Demandeur: FRANCE TELECOM, F-75015 Paris (FR)
(72) Inventeur: Lege, Jean-Claude, F-51530 Saint Martin d'Ablois (FR)
(74) Mandataire: Armengaud Ainé, Alain

(57) **Abrégé**

Dispositif (3) pour connecter un terminal d'interrogation (1) avec un serveur (4) de données confidentielles, comportant un circuit de détection (5) de l'appel du serveur effectué par l'intermédiaire de la ligne téléphonique (2) d'un utilisateur, occupant cette ligne pour une durée prédéterminée, un circuit d'identification (8) d'un code formé par l'appelant, mis en service par le circuit de détection avant achèvement de la durée prédéterminée, qui interrompt ensuite la communication émanant de l'appelant, caractérisé en ce qu'il comporte également un module de commutation (7) commandé par les circuits de détection et d'identification, qui déclenche un module de rappel (9) prenant la ligne pour appeler automatiquement le poste de l'appelant et, simultanément, connecter sur celle-ci le serveur de données, le raccordant ainsi au terminal de l'utilisateur.

## Description

La présente invention est relative à un dispositif permettant de connecter un utilisateur, disposant notamment d'un terminal d'interrogation, par le réseau téléphonique, avec un serveur de données confidentielles, en particulier un ordinateur central propre à lui fournir des informations qui ne sont pas accessibles par quiconque.

L'invention s'applique plus particulièrement au cas où l'utilisateur dispose d'un terminal, portable ou non, et souhaite, à partir du réseau, se connecter sur une source de données ou d'informations dont la mise à disposition de cet utilisateur ne peut être envisagée que pour des personnels possédant un code d'autorisation d'accès à ces informations, ce code étant fourni par l'utilisateur et vérifié par les moyens qui permettent sa connexion avec le serveur, une fois seulement ce code effectivement reconnu.

Il est classique de prévoir, dans un système de ce genre utilisant un contrôle d'identité de l'appelant, que celui-ci, qui forme sur sa ligne téléphonique le numéro d'appel du serveur, soit invité préalablement à fournir un code d'accès, à partir duquel, une fois ce code identifié, la connexion entre sa ligne et le serveur peut être établie.

C'est notamment ce qui est prévu pour la quasi totalité des bases de données à accès réservé, où l'appelant doit à partir de son clavier, appartenant à son poste téléphonique ou à son appareil "Minitel", former un indicatif secret ou mot de passe, qui autorise seulement sa connexion avec la base sollicitée.

Or, on peut concevoir que le code de l'appelant ait été divulgué par celui-ci ou lui ait été dérobé, de telle sorte que quiconque, qui est ainsi mis en connaissance de ce code, peut indûment accéder au serveur, ce qui est en soi particulièrement fâcheux et dans certains cas peut avoir des conséquences très graves dans un système interactif où l'appelant introduit lui-même des instructions de commande, a priori non vérifiées.

Un système de ce genre est connu par le brevet US-A-4 815 031, voire par le brevet US-A-4 679 226. Toutefois, ces brevets n'apportent pas une sécurité convenable à l'égard d'une utilisation frauduleuse d'un serveur de données confidentielles.

Selon ces brevets antérieurs, il suffit en effet pour le fraudeur de connaître le mot de passe de l'utilisateur pour pouvoir appeler le serveur et se connecter sur celui-ci, soit à partir d'une ligne habilitée, soit même à partir d'une ligne ordinaire pour autant, dans ce second cas, que soit connu, outre le mot de passe, un code complémentaire exigé pour établir la liaison.

La présente vise un dispositif qui évite cet inconvénient en apportant une double sécurité pour la connexion du terminal appelant avec le serveur central, l'une étant matérialisée par la formation d'un code donné par l'utilisateur lui-même comme dans les solutions classiques, l'autre étant mise en oeuvre par le serveur qui reconnaît le code fourni et n'assure la liaison avec l'appelant qu'après avoir lui-même rétabli la liaison téléphonique entre le terminal d'interrogation et la base de données qu'il comporte.

A cet effet, le dispositif pour connecter un terminal d'interrogation avec un serveur de données confidentielles, comportant un circuit de détection de l'appel du serveur effectué par l'intermédiaire de la ligne téléphonique d'un utilisateur, occupant cette ligne pour une durée prédéterminée, un circuit d'identification d'un code formé par l'appelant, mis en service par le circuit de détection avant achèvement de la durée prédéterminée, qui interrompt ensuite la communication émanant de l'appelant, se caractérise en ce qu'il comporte également un module de commutation commandé par les circuits de détection et d'identification, qui déclenche un module de rappel prenant la ligne pour appeler automatiquement le poste de l'appelant et, simultanément, connecter sur celle-ci le serveur de données, le raccordant ainsi au terminal de l'utilisateur.

Selon une autre caractéristique, le dispositif comporte un module de contrôle et de supervision, propre à interrompre la ligne en fin d'utilisation, en réinitialisant le système.

L'invention consiste ainsi à prévoir un module de commande de connexion avec le serveur qui conserve en mémoire les numéros d'appel téléphonique de tous les utilisateurs autorisés, de telle sorte que, après reconnaissance du code d'accès ou mot de passe, la communication soit d'abord coupée jusqu'à ce que le module rappelle lui-même le numéro de l'utilisateur cherchant à se connecter, ceci après identification de ce mot de passe et formation automatique du numéro d'appel du poste autorisé.

Dès lors, si le poste ou terminal de l'appelant est dans un local réservé ou fermé, auquel le fraudeur n'a pas normalement accès, il ne pourra se connecter sur le serveur, même s'il utilise le mot de passe acquis frauduleusement.

Pour déjouer le système, il faut donc que le fraudeur possède non seulement le mot de passe, mais appelle depuis le poste de l'utilisateur autorisé, ce qui confère à ce système une sécurité quasi absolue.

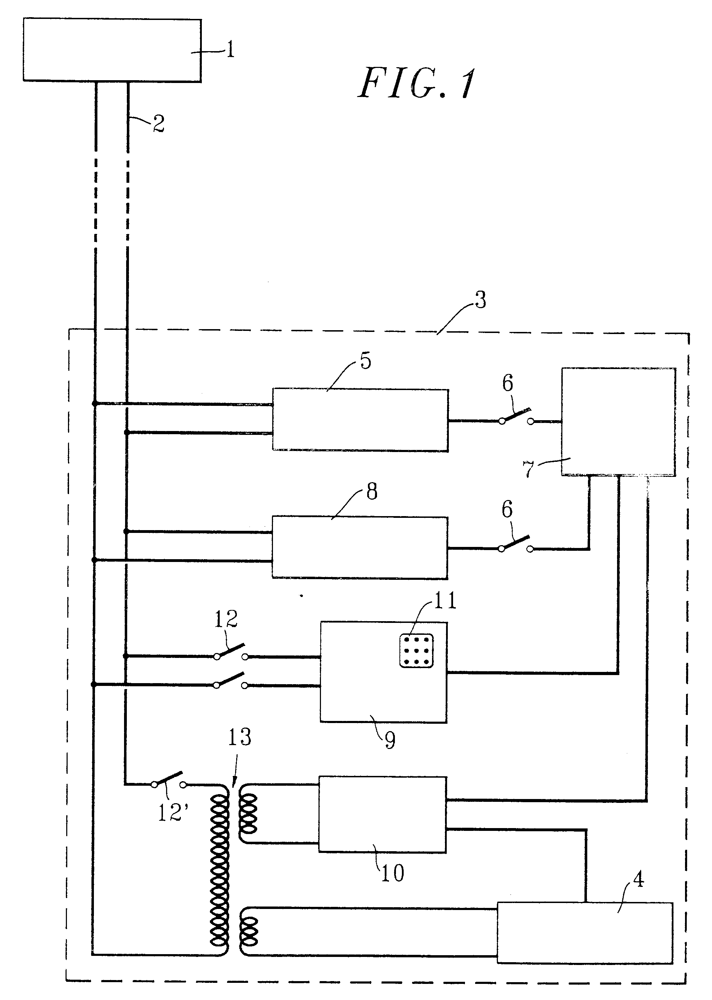

D'autres caractéristiques d'un dispositif conforme à l'invention, apparaîtront encore à travers la description qui suit d'un exemple de réalisation, donné à titre indicatif et non limitatif, en référence au dessin annexé, sur lequel la Figure unique est un schéma synoptique du dispositif considéré.

Sur la Figure, la référence 1 désigne un terminal d'utilisateur, d'un type en lui-même connu et comportant notamment un clavier de numérotation, du genre d'un poste téléphonique ordinaire, associé à un écran de visualisation, ou encore d'un ensemble combiné du type d'un écran "Minitel", à numérotation décimale ou de préférence dite "DTMF" (Dual Tone Modulation Frequency), cette numérotation pouvant être entière ou le cas échéant abrégée. Dans tous les cas, ce terminal est adapté à permettre un raccordement de l'utilisateur sur le réseau téléphonique 2 pour appeler, par l'intermédiaire d'un dispositif de connexion 3 conforme à l'invention, un serveur 4 propre à fournir à l'utilisateur des données particulières, à caractère confidentiel, dans la seule mesure où cet utilisateur est habilité à les connaître grâce à l'utilisation d'un code d'identification approprié.

Le dispositif 3 permet d'éviter que la connexion entre l'utilisateur 1 et le serveur 4 ne s'effectue, suite à l'usage non autorisé du code de cet utilisateur, lorsque ce code a été divulgué accidentellement, voire même lorsqu'il a été dérobé ou porté à la connaissance directement ou indirectement de personnes non habilitées à en faire cet usage.

La numérotation du serveur 4 par le terminal 1, déclenche dans le dispositif de connexion 3 un circuit détecteur d'appel 5 d'un type en lui-même connu qui, après traitement du signal de sonnerie véhiculé par la ligne correspondante du réseau 2 aboutissant au dispositif de connexion 3, ferme un premier contact d'un relais 6, connectant le terminal de l'utilisateur 1 avec un module de commutation 7, qui en retour avertit l'utilisateur de la prise de sa ligne, comme dans une communication téléphonique ordinaire.

L'utilisateur est alors invité, par tout moyen approprié, par exemple par un signal audio ou même vocal, à former sur le clavier de son terminal le code qui va permettre de l'identifier, ce code étant notamment constitué par une suite de chiffres, en particulier de signaux de fréquences déterminées. Le code correspondant est alors analysé dans un circuit de détection 8 puis, après comparaison avec un code de référence préenregistré, adapté pour délivrer à la sortie de ce circuit un signal d'autorisation, également admis au module de commutation 7 par un second contact du relais 6.

Avantageusement, le détecteur d'appel 5 comporte un circuit de temporisation (non représenté) propre à ouvrir automatiquement le relais 6 et à interrompre la communication avec le terminal 1 lorsque l'utilisateur ne formule pas sur la ligné un code approprié et notamment lorsque le circuit de détection 8 n'élabore pas un signal de sortie vers le module de commutation, en particulier lorsque le code introduit ne correspond pas à un quelconque des codes autorisés pour l'ensemble des utilisateurs du serveur 4.

Dans le cas en revanche où le circuit de détection 8 délivre un signal de sortie vers le module de commutation 7 suite à l'identification du code émis par l'utilisateur, ce module est mis sous tension de manière, à son tour, à délivrer un signal de commande vers un module de rappel 9 d'une part, vers un module de supervision 10 d'autre part.

Conformément en effet à l'invention, l'activation du module de rappel 9 par le module de commutation 7 va permettre, après que la ligne 2 de connexion avec le terminal de l'utilisateur 1 ait été débranchée à l'issue de la temporisation réalisant l'ouverture du relais de connexion 6, de rappeler cet utilisateur par le serveur lui-même.

Dans ces conditions, si le serveur 4 est appelé par un utilisateur quelconque, le cas échéant disposant d'un code d'accès obtenu éventuellement de manière non autorisée, le serveur va assurer un contrôle de sécurité complémentaire, en interdisant un branchement direct comme dans les solutions classiques où l'énoncé du code d'accès est en lui-même suffisant, mais en subordonnant la connexion entre l'utilisateur 1 et le serveur 4 à une opération de rappel par ce dernier du poste téléphonique propre à l'utilisateur et dont le numéro d'appel est évidemment distinct du code lui-même attribué à cet utilisateur.

Le module de rappel 9 comporte ainsi une mémoire telle que, après identification du code de l'utilisateur par le module de commutation 7, elle renseigne le module avec le numéro d'appel de cet utilisateur, lequel peut être directement formé par un clavier 11 commandé automatiquement à partir de cette mémoire.

L'appel du poste de l'utilisateur 1 par le module 9 assure par l'intermédiaire des relais 12 et 12', la fermeture de la ligne et le branchement du terminal correspondant sur le serveur 4 par l'intermédiaire des enroulements d'un transformateur 13, permettant dès lors de les relier et à l'utilisateur d'interroger le serveur comme il le souhaite.

Le module de supervision 10 permet de contrôler en permanence le fonctionnement convenable du dispositif de détection 3, en analysant la fréquence du signal issu du module de commutation 7, en autorisant la fermeture du relais 12' réalisant la connexion de l'utilisateur et du serveur, et en provoquant à la fin de la transaction l'ouverture du circuit et la déconnexion de la ligne.

On réalise ainsi un dispositif de connexion qui permet d'obtenir une liaison entre un utilisateur et un serveur à accès réservé, grâce à la mise en oeuvre d'une double sécurité, la première découlant de la formation d'un code confidentiel par l'utilisateur lui-même, la seconde par le fait que, une fois ce code analysé et identifié, le serveur rappelle lui-même l'utilisateur pour se connecter sur sa ligne, en disposant de son numéro d'appel dont il assure la corrélation avec le code préalablement fourni.

Dans ces conditions, en cas d'usage indu du code d'accès, le serveur ne peut être directement connecté sur la ligne de l'appelant. Il ne le sera qu'après rappel du numéro particulier de l'utilisateur autorisé, exigeant en conséquence que celui-ci se serve de son propre poste, ce que ne pourra faire a priori l'appelant non autorisé.

Bien entendu, il va de soi que l'invention ne se limite pas à l'exemple plus spécialement décrit ci-dessus ; elle en embrasse au contraire toutes les variantes. En particulier, le dispositif n'empêche nullement que l'utilisateur ait volontairement prévu le renvoi de sa propre ligne vers un autre poste correspondant à un autre numéro d'appel, en utilisant le système de transfert d'appels classique. Toutefois, cette éventualité ne met pas en cause la double sécurité procurée qui reste valable dans tous les cas.

## Revendications

**1 -** Dispositif (3) pour connecter un terminal d'interrogation (1) avec un serveur (4) de données confidentielles, comportant un circuit de détection (5) de l'appel du serveur effectué par l'intermédiaire de la ligne téléphonique (2) d'un utilisateur, occupant cette ligne pour une durée prédéterminée, un circuit d'identification (8) d'un code formé par l'appelant, mis en service par le circuit de détection avant achèvement de la durée prédéterminée, qui interrompt ensuite la communication émanant de l'appelant, caractérisé en ce qu'il comporte également un module de commutation (7) commandé par les circuits de détection et d'identification, qui déclenche un module de rappel (9) prenant la ligne pour appeler automatiquement le poste de l'appelant et, simultanément, connecter sur celle-ci le serveur de données, le raccordant ainsi au terminal de l'utilisateur.

**2 -** Dispositif selon la revendication 1, caractérisé en ce qu'il comporte un module de contrôle et de supervision (10), propre à interrompre la ligne (2) en fin d'utilisation, en réinitialisant le système.
